Europäisches Patentamt

European Patent Office

Office européen des brevets

(11) Veröffentlichungsnummer: **0 233 634**
**A2**

## (12) EUROPÄISCHE PATENTANMELDUNG

(21) Anmeldenummer: 87102237.2

(22) Anmeldetag: 17.02.87

(51) Int. Cl.⁴: **G01R 31/28**

(30) Priorität: 20.02.86 DE 3605522

(43) Veröffentlichungstag der Anmeldung:
26.08.87 Patentblatt 87/35

(84) Benannte Vertragsstaaten:
AT BE CH DE FR GB GR IT LI NL SE

(71) Anmelder: **Siemens Aktiengesellschaft Berlin
und München
Wittelsbacherplatz 2
D-8000 München 2(DE)**

(72) Erfinder: **Schade, Günter, Dipl.-Ing.
Fasanenweg 20
D-8013 Haar(DE)**

(54) Verfahren zum Funktionstest von digitalen Bausteinen.

(57) Verfahren zum Funktionstest von auf einer Baugruppe angeordneten digitalen Bausteinen - (BA1,...BAi-1, BAi), von denen mindestens einer mindestens einen tristatefähigen Ausgang (A'1,... A'i-1, A'i) aufweist. Dafür werden auf die Eingänge des zu prüfenden Bausteins Prüfsignale gegeben und dessen Ausgangssignale werden aufgenommen und ausgewertet. Durch binäre Steuersignale auf Prüfabschaltungseingänge, die entweder direkt oder über einen Dekodierbaustein oder ein seriell ladbares parallel auslesbares Register zugänglich sind, wird der zu prüfende Baustein ausgewählt. Hierzu werden die tristatefähigen Ausgänge der nicht zu testenden Bausteine durch die binären Steuersignale des einen logischen Zustandes auf hochohmig geschaltet, während der zu prüfende Baustein durch ein binäres Steuersignal des anderen logischen Zustandes unbeeinflußt bleibt.

EP 0 233 634 A2

## Verfahren zum Funktionstest von digitalen Bausteinen.

Verfahren zum Funktionstest von auf einer Baugruppe angeordneten digitalen Bausteinen, von denen mindestens einer mindestens einen tristatefähigen Ausgang aufweist, durch Eingabe von Eingangssignalen auf Eingänge des zu prüfenden Bausteins und durch Aufnehmen und Auswerten von Ausgangssignalen des zu prüfenden Bausteins an seinen Ausgängen.

Zu einem Funktionstest von digitalen Bausteinen auf einer Baugruppe wird jeweils ein ganzer Baustein auf der fertigen Baugruppe kontaktiert und auf seine Funktion geprüft.

Zum Funktionstesten von auf einer Baugruppe angeordneten digitalen Bausteinen existieren bereits eine Vielzahl von Testsystemen, die beispielsweise im US-Patent Nr. 4 365 334 "Electrical Testing Apparatus and Methods" oder in der Offenlegungsschrift DE 32 18 814 A1 "Digitaler In Schaltkreis Tester" schon beschrieben worden sind. Diese arbeiten aber wie in dem Bericht "In Circuit-Testen mit moderner Hardware" der Zeitschrift Elektronik 11 vom 4.6.1982 beschrieben überwiegend nach dem Prinzip der Rückwärtseinspeisung.

Bei der Rückwärtseinspeisung werden die Eingänge der digitalen Bausteine durch das stromstarke Testsystem auf vorgegebene Potentiale gebracht, und zwar gegebenenfalls gegen die von den Ausgängen anderer Bausteine der Baugruppe auf die Eingänge des zu prüfenden digitalen Bausteins eingestellten Potentiale.

Diese Prüfmethode bedingt, daß das Testsystem im Prüfbetrieb eine hohe Leistung abgeben muß und dabei die jeweils treibenden Bausteine auf der Baugruppe thermisch stark beansprucht. Dies ist im Hinblick auf die neuen schnellen und stromstarken Bausteinfamilien von immer größerem Nachteil.

Der Erfindung liegt die Aufgabe zugrunde, durch ein Verfahren zum Funktionstest von digitalen Bausteinen die Nachteile der Rückwärtseinspeisung durch ein Testsystem zu reduzieren oder die Notwendigkeit einer Rückwärtseinspeisung zu vermeiden. Das Verfahren soll auf der einen Seite gewährleisten, daß kein geprüfter Baustein beschädigt wird und gleichzeitig in Verbindung mit einem Testsystem eine eindeutige Aussage geben über die Fehlerhaftigkeit der Bausteine.

Diese Aufgabe bei einem Verfahren der eingangs angegebenen Art wird erfindungsgemäß dadurch gelöst, daß im Prüffall die tristatefähigen Ausgänge der nicht zu prüfenden Bausteine durch binäre Steuersignale des einen logischen Zustandes auf Prüfabschaltungsleitungen der nicht zu prüfenden Bausteine auf hochohmig geschaltet werden, während der zu prüfende Baustein durch ein binäres Steuersignal des anderen logischen Zustandes auf der Prüfabschaltungsleitung des zu prüfenden Bausteins unbeeinflußt bleibt.

Weitere Ausgestaltungen der Erfindung sind Gegenstand der Unteransprüche.

Die mit der Erfindung erzielten Vorteile bestehen darin, daß das Testsystem im Prüfbetrieb keine so hohe Leistung abgeben muß, um die Eingänge des zu prüfenden Bausteins auf die gewünschten Potentiale zu bringen, und daß die dem zu prüfenden Baustein vorgeschalteten treibenden Bausteine thermisch gar nicht oder nicht so stark beansprucht werden wie bei den bisher üblichen Prüfverfahren.

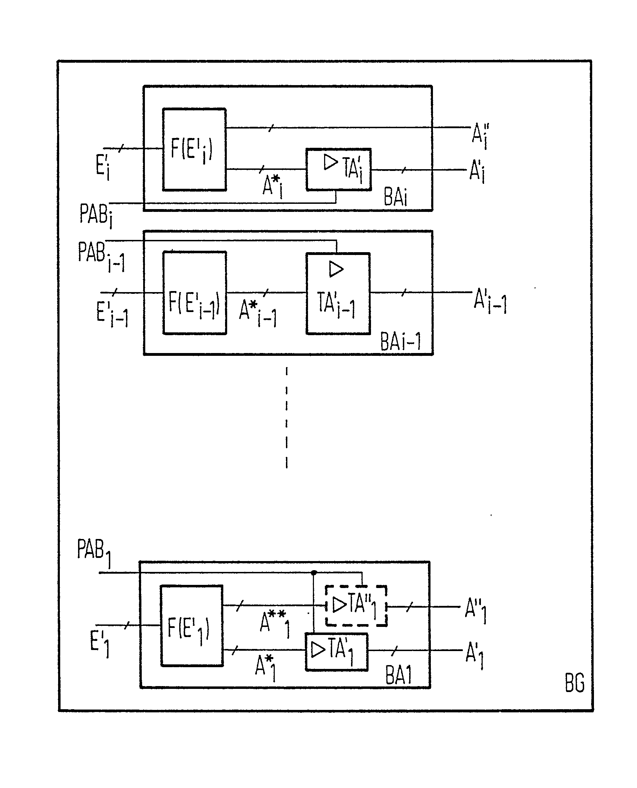

Ein Ausführungsbeispiel der Erfindung ist in Figur 1 dargestellt und zeigt eine Baugruppe mit einer Vielzahl von Bausteinen unterschiedlicher Aufbaustruktur, die im folgenden näher beschrieben wird.

Figur 1 zeigt eine Baugruppe BG mit i-Bausteinen BA1... BAi-1, BAi. Die Bausteine können dabei unterschiedlich aufgebaut sein, wie dies bei den Bausteinen BA1, BAi-1, BAi der Fall ist: Die Bausteine BA1, BAi seien ursprünglich lediglich für einen Teil der Ausgänge mit vorhandenen Tristategattern TA'1, TA'i ausgerüstet, während der Baustein BAi-1 von Natur aus über Tristategatter TA'i-1 an allen Bausteinausgängen verfüge. Durch die Prüfzusatzschaltung werden alle Bausteinausgänge der Bausteine BA1 und BAi-1, bei dem Baustein BAi durch eine reduzierte Prüfzusatzschaltung nur ein Teil der Ausgänge A'i von außen steuerbar. Der Baustein BA1 enthalte Eingänge E'1, einen Funktionsblock F (E'1) sowie Funktionsausgänge A˙1, die über vorhandene Tristategatter TA'1 in die Bausteinausgänge A'1 überführt werden, und ebenfalls Funktionsausgänge A˙˙1. Die Prüfzusatzschaltung für Baustein BA1 besteht darin, daß die Funktionsausgänge A˙˙1 mit zusätzlichen Tristategattern TA''1 ergänzt sind und diese zusammen mit den vorhandenen Tristategattern TA'1 über den Prüfabschaltungseingang PAB1 verbunden sind. Alle Bausteinausgänge des Bausteins BA1 können über den Prüfabschaltungseingang PAB1 so gesteuert werden, daß sie entweder hochohmig geschaltet werden oder nicht beeinflußt werden. Diese Prüfzusatzschaltung vermeidet dadurch die Notwendigkeit der Rückwärtseinspeisung beim Funktionstest durch ein Testsystem. Der Baustein BAi-1 enthalte Eingänge E'i-1, einen Funktionsblock F (E'i-1) sowie Funktionsausgänge A˙i-1, die über vorhandene Tristategatter TA'i-1 in die Bausteinausgänge A'i-1 überführt werden. Die Prüfzusatzschaltung umfaßt hier den Prüfabschaltungseingang PABi-1, der mit den Tristate gattern TA'i-1 verbunden ist, so daß die Ausgänge A'i-1 über den Prüfabschaltungseingang hochohmig geschaltet werden oder nicht beeinflußt werden. Da auch hier alle Bausteinausgänge steuerbar sind, ist eine Rückwärtseinspeisung beim Funktionstest durch ein Testsystem nicht erforderlich. Der Baustein BAi enthalte Eingänge E'i, einen Funktionsblock F (E'i) sowie Funktionsausgänge A''i, die zugleich Bausteinausgänge sind sowie Funktionsausgänge A*i die über vorhandene Tristategatter TA'i in die Bausteinausgänge A'i überführt werden. Die Prüfzusatzschaltung erfordert hier einen Prüfabschaltungseingang PABi, der mit den Tristategattern TA'i verbunden ist und über den die Ausgänge A'i so steuerbar sind wie die Ausgänge des Bausteins BA1. Der Aufwand für diese Ausführung der Prüfzusatzschaltung ist geringer gegenüber der Prüfzusatzschaltung des Bausteins BA1, jedoch ist es hiermit nur möglich, einen Teil der Ausgänge des Bausteins BAi zu beeinflussen, so daß eine Rückwärtseinspeisung beim Funktionstest durch ein Testsystem für die nicht zu beeinflussenden Ausgänge A''i erforderlich ist.

Zur Speisung der Prüfabschaltungseingänge PAB1,.... PABi-1 und PABi gibt es verschiedene Möglichkeiten; diese sind jedoch in Figur 1 nicht dargestellt.

Bezugszeichenliste

BG    Baugruppe mit i-Bausteinen

BA1...BAi-1,BAi    Bausteine der Baugruppe BG

A'i...A'i-1, A i   Bausteinausgänge

A''i...A''i    Bausteinausgänge, die gleich Funktionsausgange sind

A*i...A*i   Funktionsausgänge mit vorhandenem Tristategatter

A**i   Funktionsausgang mit zusätzlichem Tristategatter

TA'i....TA'i-1, TA'i   vorhandener Tristategatter

TA''i   zusätzliches Tristategatter

F(E'i)...F(E'i-1), F(E'i)   Funktionsblöcke

E'i...E'i-1, E'i   Bausteineingänge

PABi...PABi-1,    PABi    Prüfabschaltungseingänge

## Ansprüche

1. Verfahren zum Funktionstest von auf einer Baugruppe angeordneten i digitalen Bausteinen (BA1,...BAi-1, BAi), von denen mindestens einer mindestens einen tristatefähigen Ausgang aufweist, durch Eingabe von Eingangssignalen auf Eingänge des zu prüfenden Bausteins und durch Aufnehmen und Auswerten von Ausgangssignalen des zu prüfenden Bausteins an seinen Ausgängen, **dadurch gekennzeichnet**, daß im Prüffall die tristatefähigen Ausgänge der nicht zu testenden Bausteine durch binäre Steuersignale des einen logischen Zustandes auf Prüfabschaltungsleitungen der nicht zu testenden Bausteine auf hochohmig geschaltet werden, während der zu prüfende Baustein durch ein binäres Steuersignal des anderen logischen Zustandes auf der Prüfabschaltungsleitung des zu prüfenden Bausteins unbeeinflußt bleibt.

2. Prüfzusatzschaltung zum Verfahren nach Anspruch 1, **dadurch gekennzeichnet**, daß vorhandene Tristateschaltgatter (TA'1, TA'i-1, TA'i) an den Ausgängen eines Bausteins mit einem Prüfabschaltungseingang (PAB1, PABi-1, PABi) verbunden sind und über den Prüfabschaltungseingang steuerbar sind.

3. Prüfzusatzschaltung nach Anspruch 2, **dadurch gekennzeichnet**, daß alle Bausteine, deren Bausteinausgänge (A''1) nicht tristatefähig sind, durch interne Tristateschaltgatter (TA''1) ergänzt sind, die mit dem Prüfabschaltungseingang verbunden sind.

4. Prüfzusatzschaltung nach Anspruch 2, **dadurch gekennzeichnet**, daß alle nicht tristatefähigen Bausteinausgänge eines Bausteins mit externen Tristateschaltgattern verschaltet sind, die gemeinsam mit dem Prüfabschaltungseingang eines Bausteins mit einer Prüfabschaltungsleitung verbunden sind und über die Prüfabschaltungsleitung steuerbar sind.

5. Prüfzusatzschaltung nach einem der Ansprüche 2 bis 4, **dadurch gekennzeichnet**, daß die Prüfabschaltungseingänge der Bausteine über Prüfabschaltungsleitungen auf räumlich eng beieinanderliegenden kontaktierfähigen Innenpunkten der Baugruppe zugänglich sind.

6. Prüfzusatzschaltung nach einem der Ansprüche 2 bis 4, **dadurch gekennzeichnet**, daß die Prüfabschaltungseingänge der Bausteine über Prüfabschaltungsleitungen an Baugruppeneingängen direkt zugänglich sind.

7. Prüfzusatzschaltung nach einem der Ansprüche 2 bis 4, **dadurch gekennzeichnet**, daß ein als Steuerbaustein wirkendes seriell ladbares parallel auslesbares Register vorgesehen ist, wobei je einer der Prüfabschaltungseingänge der Bausteine über Prüfabschaltungsleitungen mit je einem Ausgang dieses Steuerbausteins verbunden ist und Ladeeingänge dieses Steuerbausteins über Baugruppenstifte bzw. über kontaktierfähige Innenpunkte der Baugruppe der Baugruppe direkt zugänglich sind.

8. Prüfzusatzschaltung nach einem der Ansprüche 2 bis 4, **dadurch gekennzeichnet,** daß ein als Steuerbaustein wirkender Dekodierer vorgesehen ist, dessen Ausgänge über Prüfabschaltungsleitungen mit den Prüfabschaltungseingängen der Bausteine verbunden sind, welcher m Eingänge hat, wobei $2^m$ gleich/größer der Zahl der Prüfabschaltungseingänge plus 1 ist und der so wirkt, daß ein bestimmtes Bitmuster an seinen Eingängen alle Bausteine unbeeinflußt läßt, während je ein anderes Bitmuster an seinen Eingängen genau einen Baustein unbeeinflußt läßt und alle anderen tristatefähigen Ausgängen der übrigen Bausteine unabhängig von deren Eingangssignale auf hochohmig schaltet, wobei die Eingänge dieses Steuerbausteins über Baugruppenstifte bzw. über kontaktierfähige Innenpunkte der Baugruppe direkt zugänglich sind. 8Zusammenfassung